# EUROPÄISCHE PATENTSCHRIFT

(11) **EP 2 861 877 B1**
(45) Veröffentlichungstag und Bekanntmachung des Hinweises auf die Patenterteilung: **11.01.2017**
(21) Anmeldenummer: 13744947.6
(22) Anmeldetag: 29.05.2013
(51) Int. Cl.: F16C 11/06, E05F 15/603

(54) **KUGELGELENK ALS ANGRIFFSPUNKT FÜR EIN ANTRIEBSELEMENT EINES SCHLIEßSYSTEMS**
BALL JOINT AS CONNECTION FOR A DRIVE ELEMENT OF A CLOSURE SYSTEM
JOINT À ROTULE SERVANT À LA FIXATION D' UN ÉLÉMENT D'ENTRAÎNEMENT D'UN SYSTÈME DE FERMETURE

(30) Priorität: 16.06.2012 DE 102012012018
(43) Veröffentlichungstag der Anmeldung: 22.04.2015
(73) Patentinhaber: Kiekert Aktiengesellschaft, 42579 Heiligenhaus (DE)
(72) Erfinder: HAUBS, Rainer, 46562 Voerde (DE); GOLDMANN, Sebastian, 44869 Bochum (DE)
(86) Internationale Anmeldenummer: PCT/DE2013/000294
(87) Internationale Veröffentlichungsnummer: WO 2013/185744

(56) Entgegenhaltungen:
- EP-A2- 1 905 629
- JP-A- S6 353 309
- JP-A- 2010 196 847
- US-A- 3 090 642
- US-A- 3 389 925

## Beschreibung

Die vorliegende Erfindung betrifft ein Kugelgelenk als Angriffspunkt für ein Antriebselement, sowie ein Schließsystem. Das Kugelgelenk sowie auch das Schließsystem finden insbesondere Anwendung bei elektrisch angetriebenen Fahrzeugtüren.

Fahrzeugklappen, wie z. B. Türen oder Heckklappen, sind aus dem Stand der Technik hinlänglich bekannt. Darüber hinaus sind auch elektrisch angetriebene Schließsysteme bekannt, die das Öffnen und Schließen der Fahrzeugklappen unterstützen, um den Bedienungskomfort eines Fahrzeugs zu erhöhen. Hierbei kommen insbesondere Seilzugsysteme zum Einsatz, mit deren Hilfe Fahrzeugtüren aus einer Schließstellung in eine Offenstellung bzw. umgekehrt verstellt werden können. Ein entsprechendes Schließsystem ist bspw. in der EP 1 905 629 A2 beschrieben.

Bei einem solchen Schließsystem sind zwei Seile im Wesentlichen parallel zu mindestens einer Führungsschiene einer Fahrzeugklappe, vorzugsweise einer Schiebetür, in der Karosserie eines Fahrzeugs geführt. Das Schließsystem kann hierzu entsprechende Führungsflächen und/oder Umlenkrollen für die Seile aufweisen. Jeweils ein Ende der beiden Seile des Seilantriebs ist an einer Fahrzeugklappe befestigt. Die Befestigung der Seilenden an der Fahrzeugklappe erfolgt mit Hilfe von Festpunkten, um die Seilenden dauerhaft anzubinden. Das gegenüberliegende Ende der Seile ist jeweils mit einem Antrieb verbunden. Die Fahrzeugklappe kann mit diesem Schließsystem geöffnet und geschlossen werden. Bei einer Schließbewegung einer Schiebetür wird die Schiebetür zunächst parallel zu einer Längsachse der Fahrzeugkarosserie entlang mindestens einer Führungsschiene verschoben und kurz vor der Schließstellung in eine Öffnung der Fahrzeugkarosserie hereingeschwenkt.

Die US 3 090 642 A offenbart ein Kugelgelenk für ein Antriebselement, wobei das Kugelgelenk einen Kugelkopf und eine Aufnahme mit einer Langeröffnung aufweist. Ein Zapfen an dem Kugelkopf wird von der Lageröffnung ausgenommen und in der Lageröffnung ist ein Dämpfungsmittel vorgesehen.

Ferner offenbaren auch die Dokumente US 3 389 925 A, JP 2010 196847 A und JP S63 53309 A jeweils ein Kugelgelenk mit einem Kugelkopf, einem Zapfen und einer Lageröffnung, in die der Zapfen zumindest teilweise hineinragt. Zumindest in der Schrift US 3 389 925 A ist auch ein Dämpfungsmittel innerhalb der Lageröffnung vorgesehen.

Bei dieser Schwenkbewegung, bei der die Fahrzeugklappe unter anderem in Türdichtungen gepresst wird, besteht bei den Festpunkten vereinzelt das Problem, dass sich bei großen Zugkräften des Schließsystems die mechanische Verbindung (teilweise) lösen könnte und somit eine Reparatur des Schließsystems erforderlich wird. Darüber hinaus hat sich herausgestellt, dass die Veränderung der Lage der Seile während der Offnungsbewegung/Schließbewegung zu unerwünschter Geräuschbildung führen kann.

Aufgabe der Erfindung ist es daher, die mit Bezug auf den Stand der Technik geschilderten technischen Probleme zumindest teilweise zu lösen und insbesondere ein Kugelgelenk als Angriffspunkt für ein Antriebselement anzugeben, das sich durch eine besonders hohe Betriebssicherheit auszeichnet und darüber hinaus besonders geräuscharm verschwenkbar ist.

Diese Aufgaben werden gelöst mit einem Kugelgelenk als Angriffspunkt für ein Antriebselement gemäß den Merkmalen des Patentanspruchs 1. Weitere vorteilhafte Ausgestaltungen des Kugelgelenks sind in den abhängig formulierten Patentansprüchen angegeben. Es ist darauf hinzuweisen, dass die in abhängig formulierten Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegeben Merkmale in der Beschreibung näher präzisiert und erläutert, wobei weitere bevorzugte Ausgestaltungen der Erfindung dargestellt werden.

Das Kugelgelenk als Angriffspunkt für ein Antriebselement weist einen Kugelkopf und eine Aufnahme mit einer Lageröffnung auf, wobei der Kugelkopf einen Zapfen zur Verschwenkbegrenzung des Kugelkopfs in der Lageröffnung aufweist, wobei der Kugelkopf mit dem Zapfen zumindest teilweise in der Lageröffnung angeordnet ist, und wobei in der Lageröffnung mindestens ein Dämpfungselement derart angeordnet ist, dass beim Verschwenken des Kugelkopfs ein Kontakt des Zapfens mit der Aufnahme unterbunden wird. Dabei stützt sich der Kugelkopf in einer ersten Richtung mit einer Kugelfläche an eine Führungsfläche des Dämpfungselements ab und in einer zweiten Richtung blockiert ein Ring, der in der Lageröffnung angeordnet ist, die Bewegung des Kugelkopfs.

Das Kugelgelenk dient als Angriffspunkt bzw. Festpunkt/Montagepunkt für ein Antriebselement, wobei es sich bei dem Antriebselement insbesondere um einen Seilzug eines Schließsystems oder um ein Steuergestänge anderer beweglicher Komponenten einer Fahrzeugklappe, wie z. B. eines Servoschlosses, handeln kann. Insbesondere ist das Antriebselement derart an dem Kugelgelenk befestigt, dass Antriebskräfte bspw. eines Antriebs über das Antriebselement in das Kugelgelenk einleitbar sind. Hierzu weist das Kugelgelenk einen Kugelkopf auf, an dem das Antriebselement bevorzugt befestigt wird, sowie eine Aufnahme für den Kugelkopf, wobei die Aufnahme bspw. an einer Fahrzeugklappe befestigbar ist. Hierzu ist der Kugelkopf (wenigstens teilweise) drehbar in einer Lageröffnung der Aufnahme angeordnet. Um dem Kugelkopf und der Aufnahme eine geeignete Verschleißfestigkeit zu geben, bestehen diese bevorzugt aus Metall. Der Kugelkopf weist bevorzugt einen Kugeldurchmesser von 4 mm bis 20 mm [Millimeter], bevorzugt 5 mm bis 16 mm auf.

Der Kugelkopf weist darüber hinaus (mindestens) einen Zapfen auf, bei dem es sich bevorzugt um einen zylindrischen oder quaderförmigen Fortsatz handelt, der sich aus einer Kugelfläche des Kugelkopfs hinaus erstreckt. Ein Zapfendurchmesser des Zapfens beträgt bevorzugt 1 mm bis 6 mm [Millimeter], besonders bevorzugt 2 mm bis 4 mm. Kugelkopf und Zapfen sind bevorzugt einstückig miteinander ausgebildet. Der Zapfen ist mit dem Kugelkopf zumindest teilweise in der Lageröffnung der Aufnahme angeordnet und begrenzt eine Verschwenkbarkeit des Kugelkopfs in der Lageröffnung. Dies bedeutet insbesondere, dass ein Schwenkwinkel, mit dem eine Längsachse des Kugelkopfs gegenüber einer Zentrumsachse der Lageröffnung verschwenkbar ist, durch den Zapfen (mechanisch bzw. durch Kontakt-Anschlag) beschränkt wird. Klarzustellen ist hier, dass es sich bei der Längsachse um eine Symmetrieachse des Kugelkopfs handelt. Der maximale Schwenkwinkel beträgt 5° bis 40°, bevorzugt 8° bis 20°. Mit anderen Worten ist der Kugelkopf durch den Zapfen ab einem bestimmten Schwenkwinkel gegenüber einer weiteren Verschwenkung blockierbar. Darüber hinaus ist auch bevorzugt, dass der Zapfen eine Rotation des Kugelkopfs um die Längsachse im Wesentlichen nicht behindert. Durch die Begrenzung der Verschwenkbarkeit des Kugelkopfs durch den Zapfen ist in besonders vorteilhafter Weise gewährleistet, dass der Kugelkopf im normalen Betrieb durch eine zu große Verschwenkung gegenüber der Aufnahme nicht aus der Lageröffnung heraus gehebelt werden kann. Um eine unerwünschte Geräuschbildung des Kugelgelenks zu vermindern oder sogar vollständig zu vermeiden, ist ein direkter Kontakt zwischen dem Zapfen und der Aufnahme unterbunden. Aus diesem Grund ist in der Lageröffnung mindestens ein Dämpfungselement angeordnet. Das (mindestens eine) Dämpfungselement kann beispielsweise (zumindest teilweise) die Lageröffnung und/oder den Zapfen bedecken. Das Dämpfungselement besteht bevorzugt aus einem weicheren Material als der Zapfen des Kugelkopfs und/oder die Aufnahme.

Vorzugsweise besteht das mindestens eine Dämpfungselement zumindest teilweise aus Kunststoff oder Gummi. Durch diese Ausgestaltung des Dämpfungselements konnte eine besonders hohe Geräuschdämpfung erzielt werden.

Ebenfalls vorteilhaft ist es, wenn das mindestens eine Dämpfungselement auf dem Zapfen angeordnet ist. Dies bedeutet bspw., dass das mindestens eine Dämpfungselement auf einer Oberfläche des Zapfens zumindest teilweise befestigt ist. Insbesondere kann es sich hierbei beispielsweise auch um eine Beschichtung der Oberfläche des Zapfens handeln.

Ferner ist es vorteilhaft, wenn das mindestens eine Dämpfungselement rohrförmig ausgebildet ist und wobei eine Zentrumsachse der Lageröffnung mit einer Rotationsachse des mindestens einen Dämpfungselements fluchtet. Durch diese Ausgestaltung wird insbesondere die Montage des mindestens einen (separaten) Dämpfungselements in der Lageröffnung erleichtert. Bei der Zentrumsachse der Lageröffnung kann es sich bspw. um eine Bohrungsachse der Lageröffnung handeln.

Vorzugsweise ist das mindestens eine Dämpfungselement mit einer Presspassung in der Lageröffnung befestigt. Hierdurch ist gewährleistet, dass das mindestens eine (separate) Dämpfungselement seine Lage in der Lageröffnung im Wesentlichen nicht verändern kann.

Ebenfalls vorteilhaft ist es, wenn das mindestens eine Dämpfungselement auf seiner Außenfläche einen Absatz aufweist, und wobei der Absatz das mindestens eine Dämpfungselement in einer ersten Richtung parallel zu der Rotationsachse gegenüber der Aufnahme abstützt. Bei dem Absatz handelt es sich insbesondere um einen Durchmessersprung auf einer Außenfläche des mindestens einen Dämpfungselements.

Bei einer weiteren Ausführungsform ist vorgesehen, dass das mindestens eine Dämpfungselement zumindest einen Haken aufweist, und wobei der Haken das mindestens eine Dämpfungselement, in einer zweiten Richtung parallel zu der Rotationsachse, gegenüber der Aufnahme befestigt. Mit dem zumindest einen Haken kann das mindestens eine Dämpfungselement besonders einfach in der Lageröffnung der Aufnahme justiert werden. Bevorzugt ist, dass ein umlaufender Haken (Kragen) oder über den Umfang verteilte Haken vorgesehen sind.

Besonders vorteilhaft ist es, wenn das mindestens eine Dämpfungselement eine Führungsfläche für den Kugelkopf aufweist. Dies bedeutet insbesondere, dass der Kugelkopf mit seiner äußeren Kugelfläche zumindest teilweise an der Führungsfläche des mindestens einen Dämpfungselements anliegt und dadurch eine besonders genaue und geräuscharme Führung des mindestens einen Kugelkopfs in der Lageröffnung der Aufnahme erzielt. Die Führungsfläche ist demnach bevorzugt wenigstens teilweise sphärisch (wie der Kugelkopf) ausgeführt.

Einem weiteren Aspekt der Erfindung folgend wird auch ein Schließsystem für eine Fahrzeugklappe vorgeschlagen, das mindestens ein Antriebselement umfasst, wobei das mindestens eine Antriebselement an mindestens einem erfindungsgemäßen Kugelgelenk befestigt ist, und wobei das zumindest eine Antriebselement durch einen Antrieb antreibbar ist.

Mit Bezug auf den generellen Aufbau des Schließsystems wird insbesondere auf die eingangs genannte EP 1 905 629 A2 verwiesen, die zur detaillierteren Beschreibung der Antriebe, der Seilzüge, des Öffnungs- und Schließvorgangs herangezogen werden kann.

Zudem wird auch ein Fahrzeug vorgeschlagen, das zumindest eine Fahrzeugklappe mit einem erfindungsgemäßen Schließsystem aufweist.

Die Erfindung, sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Es zeigen schematisch:
- Fig. 1:: ein erfindungsgemäßes Kugelgelenk in einer Schnittdarstellung, und
- Fig. 2:: ein Fahrzeug mit einem erfindungsgemäßen Schließsystem.

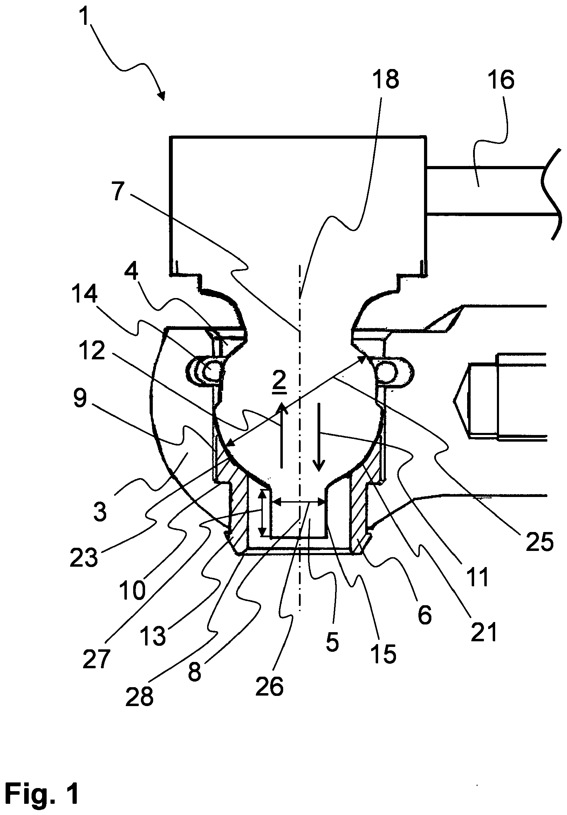

Fig. 1 zeigt ein Kugelgelenk 1 mit einem Kugelkopf 2, wobei der Kugelkopf 2 in einer Lageröffnung 4 einer Aufnahme 3 gelagert ist. Der Kugelkopf 2 des Kugelgelenks 1 weist zudem einen Zapfen 5 auf, der sich aus einer Kugelfläche 23 des Kugelkopfs 2 in Richtung einer Längsachse 18 mit einem Kugeldurchmesser 25 und einer Höhe 27 erstreckt. Der Zapfen 5 ist in diesem Ausführungsbeispiel zylinderförmig ausgebildet und weist einen Zapfendurchmesser 26 sowie eine Oberfläche 15 auf. In der Lageröffnung 4 der Aufnahme 3 ist zudem ein Dämpfungselement 6 angeordnet, deren Schnittfläche in der vorliegenden Schnittdarstellung schraffiert dargestellt ist. Das Dämpfungselement 6 ist zudem rohrförmig ausgebildet und hat eine Rotationsachse 8, die mit einer Zentrumsachse 7 der Lageröffnung 4 und der Längsachse 18 des Kugelkopfs 2 fluchtet, wenn sich der Kugelkopf 2, wie in der Fig. 1 gezeigt, in einer Neutralstellung befindet. Das Dämpfungselement 6 weist zudem an einer Außenfläche 9 einen Absatz 10 auf, mit dem sich das Dämpfungselement 6 in einer ersten Richtung 11 gegen die Aufnahme 3 abstützt. Das Dämpfungselement 6 ragt in diesem Ausführungsbeispiel in der ersten Richtung 11 (parallel zur Zentrumsachse 7 und zur Rotationsachse 8) aus der Aufnahme 3 hervor und bildet an einer Stirnfläche 28 einen Haken 13, mit dem das Dämpfungselement 6 in einer zweiten Richtung 12 (parallel zur Zentrumsachse 7 und zur Rotationsachse 8) gegenüber der Aufnahme 3 gesichert ist. Der Kugelkopf 2 ist in der Lageröffnung 4 der Aufnahme 3 verschwenkbar, so dass die Längsachse 18 des Kugelkopfs 2 mit der Zentrumsachse 7 der Lageröffnung 4 einen Winkel bildet, wenn der Kugelkopf 2 aus der Neutralstellung verschwenkt wird. Diese Verschwenkung wird jedoch durch den Zapfen 5 blockiert, sobald der Zapfen 5 mit dem Dämpfungselement 6 in Berührung kommt. Zudem ist der Kugelkopf 2 in der Lageröffnung 4 der Aufnahme 3 um seine Längsachse 18 rotierbar. Um ein Heraustreten des Kugelkopfs 2 aus der Lageröffnung 4 der Aufnahme 3 zu verhindern, ist in der Lageröffnung 4 zudem ein Ring 14 angeordnet. Dieser Ring 14 blockiert eine Bewegung des Kugelkopfs 2 entlang der zweiten Richtung 12. In Richtung der ersten Richtung 11 stützt sich der Kugelkopf 2 zudem mit seiner Kugelfläche 23 an eine Führungsfläche 21 des Dämpfungselements 6 ab. An dem Kugelkopf 2 des Kugelgelenks 1 ist zudem ein Antriebselement 16 befestigt, das in diesem Ausführungsbeispiel als Seil eines Seilzugs ausgebildet ist.

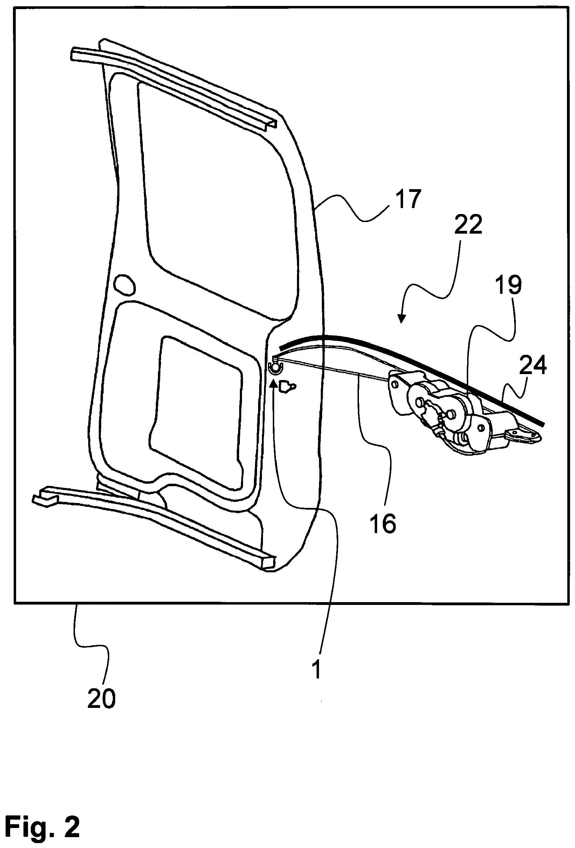

Die Fig. 2 zeigt (schematisch angedeutet) ein Fahrzeug 20 mit einem Schließsystem 22, dass das Kugelgelenk 1 gemäß Fig. 1, ein Antriebselement 16 sowie einen Antrieb 19 umfasst. Das Kugelgelenk 1 ist an einem Schlitten einer Fahrzeugklappe 17 befestigt, so dass die Fahrzeugklappe 17 mit Hilfe des Schließsystems 22 entlang einer, an dem Fahrzeug 20 befestigten, Schiene 24 verfahrbar ist.

Mit dem erfindungsgemäßen Kugelgelenk können Fahrzeugtüren auch mit großen Kräften sicher und geräuscharm automatisch geöffnet und geschlossen werden.

### Bezugszeichenliste

- 1: Kugelgelenk
- 2: Kugelkopf
- 3: Aufnahme
- 4: Lageröffnung
- 5: Zapfen
- 6: Dämpfungselement
- 7: Zentrumsachse
- 8: Rotationsachse
- 9: Außenfläche
- 10: Absatz
- 11: erste Richtung
- 12: zweite Richtung
- 13: Haken
- 14: Ring
- 15: Oberfläche
- 16: Antriebselement
- 17: Fahrzeugklappe
- 18: Längsachse
- 19: Antrieb
- 20: Fahrzeug
- 21: Führungsfläche
- 22: Schließsystem
- 23: Kugelfläche
- 24: Schiene
- 25: Kugeldurchmesser
- 26: Zapfendurchmesser
- 27: Höhe
- 28: Stirnfläche

## Patentansprüche

1. Kugelgelenk (1) als Angriffspunkt für ein Antriebselement (16), aufweisend einen Kugelkopf (2) und eine Aufnahme (3) mit einer Lageröffnung (4), wobei der Kugelkopf (2) einen Zapfen (5) zur Verschwenkbegrenzung des Kugelkopfes (2) in der Lageröffnung (4) aufweist, wobei der Kugelkopf (2) mit dem Zapfen (5) zumindest teilweise in der Lageröffnung (4) angeordnet ist, und wobei in der Lageröffnung (4) mindestens ein Dämpfungselement (6) derart angeordnet ist, dass beim Verschwenken des Kugelkopfes (2) ein Kontakt des Zapfens (5) mit der Aufnahme (3) unterbunden wird, **dadurch gekennzeichnet, dass** sich der Kugelkopf (2) in einer ersten Richtung (11) mit einer Kugelfläche (23) an eine Führungsfläche (21) des Dämpfungselements (6) abstützt und dass in der Lageröffnung (4) ein Ring (14) angeordnet ist, wobei der Ring eine Bewegung des Kugelkopfes (2) entlang einer zweiten Richtung (12) blockiert.

2. Kugelgelenk (1) nach Patentanspruch 1, wobei das mindestens eine Dämpfungselement (6) zumindest teilweise aus Kunststoff oder Gummi besteht.

3. Kugelgelenk (1) nach einem der vorhergehenden Patentansprüche, wobei das mindestens eine Dämpfungselement (6) auf dem Zapfen (5) angeordnet ist.

4. Kugelgelenk (1) nach einem der vorhergehenden Patentansprüche, wobei das mindestens eine Dämpfungselement (6) rohrförmig ausgebildet ist und wobei eine Zentrumsachse (7) der Lageröffnung (4) mit einer Rotationsachse (8) des mindestens einen Dämpfungselements (6) fluchtet.

5. Kugelgelenk (1) nach einem der vorhergehenden Patentansprüche, wobei das mindestens eine Dämpfungselement (6) mit einer Presspassung in der Lageröffnung (4) befestigt ist.

6. Kugelgelenk (1) nach einem der vorhergehenden Patentansprüche, wobei das mindestens eine Dämpfungselement (6) auf seiner Außenfläche (9) einen Absatz (10) aufweist, und wobei der Absatz (10) das mindestens eine Dämpfungselement (6) in einer ersten Richtung (11) parallel zu der Rotationsachse (8) gegenüber der Aufnahme (3) abstützt.

7. Kugelgelenk (1) nach einem der vorhergehenden Patentansprüche, wobei das mindestens eine Dämpfungselement (6) zumindest einen Haken (13) aufweist, und wobei der Haken (13) das mindestens eine Dämpfungselement (6) in einer zweiten Richtung (12) parallel zu der Rotationsachse (8) gegenüber der Aufnahme (3) befestigt.

8. Kugelgelenk (1) nach einem der vorhergehenden Patentansprüche, wobei das mindestens eine Dämpfungselement (6) eine Führungsfläche (21) für den Kugelkopf (2) aufweist.

9. Schließsystem (22) für eine Fahrzeugklappe (17), umfassend mindestens ein Antriebselement (16), wobei das mindestens eine Antriebselement (16) an mindestens einem Kugelgelenk (1) nach einem der vorhergehenden Patentansprüchen befestigt ist, und wobei das zumindest eine Antriebselement (16) durch einen Antrieb (19) antreibbar ist.

10. Fahrzeug (20), aufweisend zumindest eine Fahrzeugklappe (17) mit einem Schließsystem (22) gemäß Patentanspruch 9.

## Claims

1. Ball joint (1) serving as a point of engagement for a drive element (16) comprising a spherical head (2) and a seat (3) with a bearing opening (4), in which the spherical head (2) contains a journal (5) for limiting pivoting of the spherical head (2) in the bearing opening (4), in which the spherical head (2) with the journal (5) is at least partially arranged in the bearing opening (4) and in which at least one damping element (6) is arranged in the bearing opening (4) in such a way that when the spherical head (2) is pivoted, contact between the journal (5) and the seat (3) is prevented, **characterized in that** a spherical surface (23) of the spherical head (2) is supported in a first direction (11) by a guide surface (21) of the damping element (6) and that a ring (14) is arranged in the bearing opening (4) and in which the ring blocks a movement of the spherical head (2) along a second direction (12).

2. Ball joint (1) according to claim 1, in which the at least one damping element (6) is at least partially made of plastic or rubber.

3. Ball joint (1) according to one of the above claims, in which the at least one damping element (6) is arranged on the journal (5).

4. Ball joint (1) according to one of the above claims, in which the at least one damping element (6) is tubular and in which a centre axis (7) of the bearing opening (4) aligns with an axis of rotation (8) of the at least one damping element (6).

5. Ball joint (1) according to one of the above claims, in which the at least one damping element (6) is fixed to the bearing opening (4) by press fitting.

6. Ball joint (1) according to one of the above claims, in which the at least one damping element (6) contains a ledge (10) on its outer surface (9) and in which the ledge (10) supports the at least one damping element (6) in a first direction (11) parallel to the axis of rotation (8) opposite the seat (3).

7. Ball joint (1) according to one of the above claims, in which the at least one damping element (6) contains at least one hook (13) and in which the hook (13) secures the at least one damping element (6) in a second direction (12) parallel to the axis of rotation (8) opposite the seat (3).

8. Ball joint (1) according to one of the above claims, in which the at least one damping element (6) contains a guide surface (21) for the spherical head (2).

9. Locking system (22) for a vehicle flap (17), comprising at least one drive element (16), in which the at least one drive element (16) is fixed to at least one ball joint (1) in accordance with one of the above claims and in which the at least one drive element (16) can be moved by a drive (19).

10. Vehicle (20), containing at least one vehicle flap (17) with a locking system (22) according to claim 9.

## Revendications

1. Articulation à rotule (1) servant de point d'application pour un élément d'entraînement (16), comprenant une tête sphérique (2) et un logement (3) présentant une ouverture de montage (4), la tête sphérique (2) présentant une cheville (5) pour limiter le pivotement de la tête sphérique (2) dans l'ouverture de montage (4), la tête sphérique (2) étant agencée de sorte que la cheville (5) se trouve au moins partiellement dans l'ouverture de montage (4), et au moins un élément d'amortissement (6) étant agencé dans l'ouverture de montage (4) de manière à éviter un contact de la cheville (5) avec le logement (3) lors du pivotement de la tête sphérique (2) **caractérisée en ce que** la tête sphérique (2) s'appuie dans un premier direction (11) avec la surface de sphère (23) contre une surface de guidage (21) de l'élément d'amortissement (6) et qu'une bague (14) est agencée dans l'ouverture de montage (4), la bague bloquant un mouvement de la tête sphérique (2) le long d'un deuxième direction (12).

2. Articulation à rotule (1) selon la revendication 1 **caractérisée en ce qu'**au moins l'élément d'amortissement (6) se compose au moins en partie de plastique ou de caoutchouc.

3. Articulation à rotule (1) selon l'une des revendications précédentes **caractérisée en ce qu'**au moins l'élément d'amortissement (6) est agencé sur la cheville (5).

4. Articulation à rotule (1) selon l'une des revendications précédentes **caractérisée en ce qu'**au moins l'élément d'amortissement (6) est de forme tubulaire et un axe de centre (7) de l'ouverture de montage (4) est aligné avec un axe de rotation (8) d'au moins l'élément d'amortissement (6).

5. Articulation à rotule (1) selon l'une des revendications précédentes **caractérisée en ce qu'**au moins l'élément d'amortissement (6) est fixé dans l'ouverture de montage (4) par un ajustage pressé.

6. Articulation à rotule (1) selon l'une des revendications précédentes **caractérisée en ce qu'**au moins l'élément d'amortissement (6) présente sur sa surface extérieure (9) un talon (10) et le talon (10) supporte au moins l'élément d'amortissement (6) dans un premier direction (11) parallèlement à l'axe de rotation (8) par rapport au logement (3).

7. Articulation à rotule (1) selon l'une des revendications précédentes **caractérisée en ce qu'**au moins l'élément d'amortissement (6) présente sur sa surface extérieure (9) un talon (13) et le talon (13) supporte au moins l'élément d'amortissement (6) dans un deuxième direction (12) parallèlement à l'axe de rotation (8) par rapport au logement (3).

8. Articulation à rotule (1) selon l'une des revendications précédentes **caractérisée en ce qu'**au moins l'élément d'amortissement (6) présente une surface de guidage (21) pour la tête sphérique (2).

9. Système de fermeture (22) pour hayon de véhicule (17) comprenant au moins un élément d'entraînement (16) **caractérisé en ce qu'**au moins l'élément d'entraînement (16) est fixé à au moins une articulation à rotule (1) selon une des revendications précédentes et au moins l'élément d'entraînement (16) peut être entraîné par un entraînement (19).

10. Véhicule (2) présentant au moins un hayon de véhicule (17) avec un système de fermeture selon la revendication 9.
